# EUROPEAN PATENT APPLICATION

(11) **EP 2 584 436 A1**
(43) Date of publication of application: **24.04.2013**
(21) Application number: 11795513.8
(22) Date of filing: 20.05.2011
(51) Int. Cl.: G06F 3/041, G06F 3/048

(54) **INFORMATION DISPLAY DEVICE AND METHOD FOR MOVING OPERATION OF ONSCREEN BUTTON**

(30) Priority: 15.06.2010 JP 2010136288
(71) Applicant: Nissan Motor Co., Ltd, Yokohama-shi, Kanagawa 221-0023 (JP)
(72) Inventor: SUZUKI, Motoyuki, Kanagawa 243-0123 (JP); OHARA, Hisanori, Kanagawa 243-0123 (JP)
(74) Representative: Grünecker, Kinkeldey, Stockmair & Schwanhäusser
(86) International application number: PCT/JP2011/061655
(87) International publication number: WO 2011/158605

(57) **Abstract**

An information display device includes a display that includes a touch panel and displays an on-screen button to which a given function is allocated on a display screen; and a controller that (a) detects two or more points that an operator touches on the touch panel, (b1) judges whether or not the touched points coincide with an outline of the on-screen button, and (c1) transfers a normal operation mode to a shifting mode for shifting a position of the on-screen button when the touched points coincide with the outline of the on-screen button. According to the information display device, an on-screen button can be shifted at a short time.

## Description

### TECHNICAL FIELD

The present invention relates to an information display device in which displayed positions of on-screen buttons are customizable, and to a method for a shifting operation of an on-screen button.

### BACKGROUND ART

A prior-art display device is disclosed in a Patent Literature 1 listed below. The display device is provided with a touchscreen, and on-screen buttons to which given functions are allocated are displayed on the display device. In the display device, when shifting an on-screen button, the on-screen button is touched for a given time, i.e. continuously pressed (long-pressed).

### CITATION LIST

### PATENT LITERATURE

Patent Literature 1: Japanese Patent Unexamined Publication No. H10-274538

### SUMMARY OF INVENTION

In the above prior-art display device, a normal operation mode is transferred to a shifting mode for shifting a displayed position of an on-screen button by long-pressing an on-screen button to be shifted. Transferring to the shifting mode takes a while, because long-pressing of an on-screen button is needed in order to transfer to the shifting mode.

An object of the present invention provides an information display device in which a displayed position of an on-screen button on a touchscreen can be shifted in a short time, and a method for a shifting operation of an on-screen button.

A first aspect of the present invention provides an information display device that includes a display (display means) that includes a touch panel and displays an on-screen button to which a given function is allocated on a display screen; and a controller (position shifting means) that (a) detects two or more points that an operator touches on the touch panel, (b1) judges whether or not the touched points coincide with an outline of the on-screen button, and (c1) transfers a normal operation mode to a shifting mode for shifting a position of the on-screen button when the touched points coincide with the outline of the on-screen button.

A second aspect of the present invention provides an information display device that includes a display (display means) that includes a touch panel and displays an on-screen button to which a given function is allocated on a display screen; and a controller (position shifting means) that (a) detects two or more points that an operator touches on the touch panel, (b2) judges whether or not an pinch-in operation to narrow a distance of the touched points is done, and (c2) transfers a normal operation mode to a shifting mode for shifting a position of the on-screen button when the pinch-in operation is done.

A third aspect of the present invention provides a method for a shifting operation of an on-screen button to shift an on-screen button to which a given function is allocated on a touchscreen of which a display screen the on-screen button is displayed on, the method including: (A) detecting two or more points that an operator touches on the touch panel, (B1) judging whether or not the touched points coincide with an outline of the on-screen button, and (C1) transferring a normal operation mode to a shifting mode for shifting a position of the on-screen button when the touched points coincide with the outline of the on-screen button.

A fourth aspect of the present invention provides a method for a shifting operation of an on-screen button to which a given function is allocated on a touchscreen of which a display screen the on-screen button is displayed on, the method including: (A) detecting two or more points that an operator touches on the touch panel, (B2) judging whether or not an pinch-in operation to narrow a distance of the touched points is done, and (C2) transferring a normal operation mode to a shifting mode for shifting a position of the on-screen button when the pinch-in operation is done.

### BRIEF DESCRIPTION OF DRAWINGS

[Fig. 1] It is a block diagram showing a configuration of an information display device according to an embodiment.
[Fig. 2] It is a flowchart showing operations of the information display device.
[Fig. 3] They are explanatory diagrams showing a pinch-in [pinch-close] operation of a button displayed on a display.
[Fig. 4] They are diagrams showing button shifting on the display.

### DESCRIPTION OF EMBODIMENTS

Hereinafter, an embodiment will be explained with reference to the drawings.

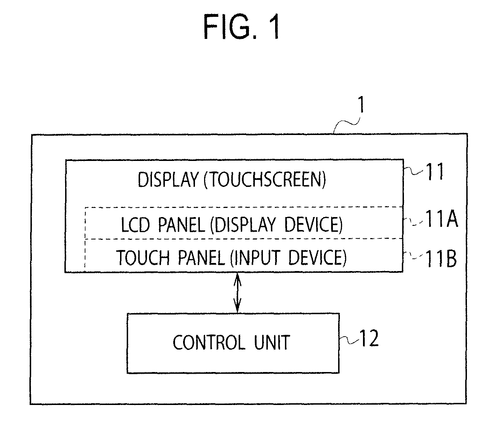

As shown in Fig. 1, an information display device 1 according to the present embodiment is configured to include a display (display means) 11, a control unit (controller) 12 (movement shifting means) that controls viewing of the display 11.

The display 11 is a so-called a touchscreen, and includes an LCD panel 11 A (a display device) and a touch panel 11 B (an input device). The touch panel 11B in the present embodiment is an electrostatic capacitance type for detecting a position(s) by detecting a change of electrostatic capacitance between a fingertip and a conductive film. According to the touch panel 11B, it can be detected based on an imperceptible change of electrostatic capacitance where a condenser composed of a planar sensor and a finger exists on a surface of the sensor. In addition, according to the touch panel 11B, finger tracking on the surface of the sensor can be detected as movement on a screen of the display 11. An on-screen button is actualized by displaying an image of a button and then an area of the button is detected by the touch panel 11B. Note that, since a touch panel is an already-established well-known technology, its detailed explanations are omitted here.

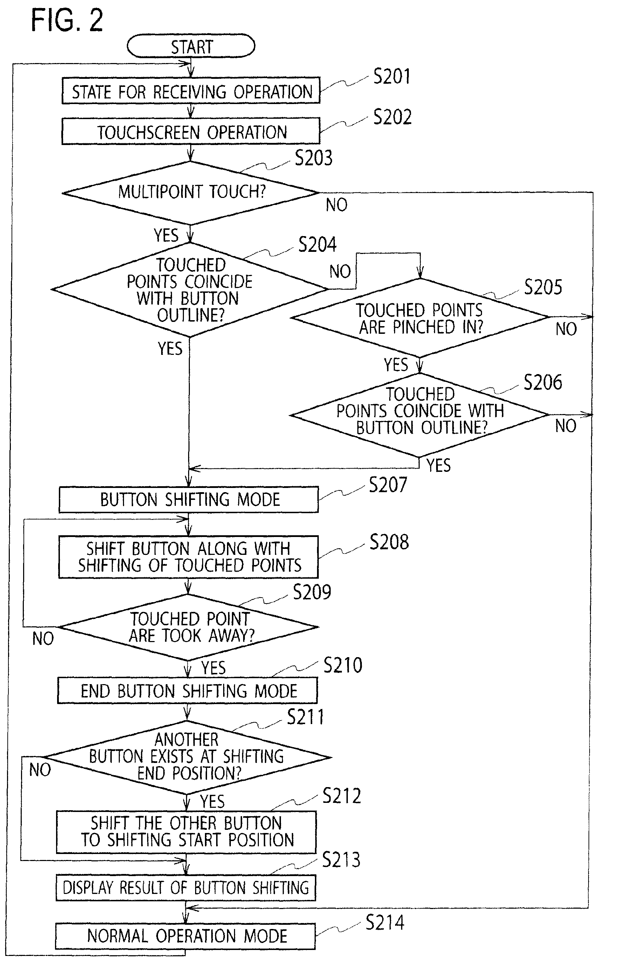

The control unit 12 functions as a control locus of operations of the device, and is actualized by a micro computer that includes resources such as a CPU, a memory device and an I/O device that are needed for a computer that controls various operational processings based on a program. The control unit 12 receives a signal associated with an operation onto the touch panel 11B and then executes processes in a flowchart shown in Fig. 2 based on the received signal and control logics (program) preliminarily stored therein. As explained above, the control unit 12 comprehensively manages and controls all displaying operations of the device that includes an after-explained process for shifting/changing an on-screen button according to the present invention. Therefore, the above shifting/changing process is actualized by a specific means (the control unit 12) as a shifting/changing means with which a software and hardware resources cooperate.

Next, a shifting/changing process of an on-screen button 31 displayed on the display 11 will be explained with reference to the flowchart shown in Fig. 2.

Firstly, the information display device goes into a state for receiving operation (step S201).

Subsequently, detected is an operation onto the display (touchscreen) 11 such that a user (an operator) such as a driver of a vehicle on which the information display device is installed touches the display (touchscreen) 11 by his/her fingertip(s) (step S202). Subsequently, it is judged whether or not the user's fingertips touch plural points (at least two points) on the display 11 (step S203). If no user's fingertip touches plural points on the display 11 (NO in step S203), a normal operation mode is maintained (step S214). The normal operation mode is not a shifting mode for shifting a position of an on-screen button 31 on the display 11, but a mode for executing an allocated function upon operating (touching/pressing) the on-screen button 11.

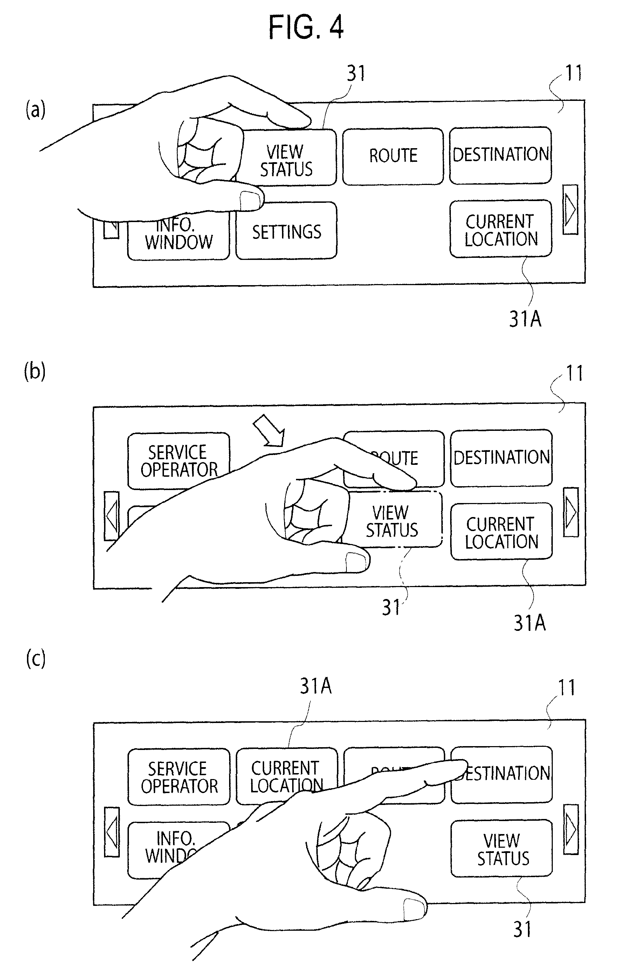

On the other hand, if the user's fingertips touch plural points on the display 11 (YES in step S203), it is judged whether or not the touched positions coincide with an outline of any of on-screen buttons 31 displayed on the display 11 (step S204). If the touched positions coincide with an outline of an on-screen buttons 31 (YES in step S204: Fig. 4(a)), it is transferred to an after-explained shifting mode of the on-screen button 31 (step S207).

On the other hand, if the touched positions don't coincide with an outline of an on-screen buttons 31 (NO in step S204), it is judged whether or not the user's fingertips are being under a pinch-in (pinch-close) operation (step S205). The pinch-in operation is an operation to making the touched plural points close to each other, for example, an operation to closed fingertips of a thumb and a forefinger.

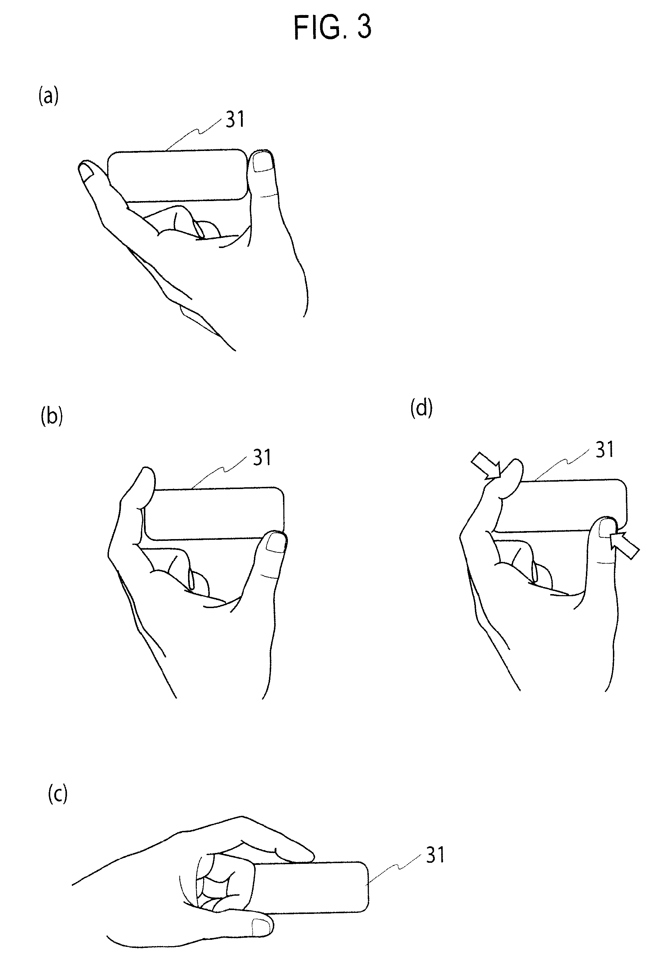

The pinch-in operation is detected even in any direction, as shown in Figs 3(a) to 3(c). For example, in a pinch-in operation shown in Fig. 3(a), user's two fingertips are closed laterally so as to pinch an on-screen button 31. In a pinch-in operation shown in Fig. 3(b), user's two fingertips are closed diagonally so as to pinch an on-screen button 31. In a pinch-in operation shown in Fig. 3(c), user's two fingertips are closed vertically so as to pinch an on-screen button 31.

Further, an operation such that fingertips are moved by a pinch-in operation from a state where touched points by user's fingertips don't coincide with an outline of an on-screen button 31 and then the touched points after being moved coincided with the outline of the on-screen button 31 is also processed as an operation for specifying the on-screen button 31 to be shifted. In addition, as shown in Fig. 3(d), a pinch-in operation from a state where touched points by user's fingertips coincide with an outline of an on-screen button 31 so as to move the fingertips to an inside of the on-screen button 31 is also processed as an operation for specifying the on-screen button 31 to be shifted.

If no pinch-in operation is detected in the step S205 (NO in step S205), a normal mode is maintained (step S214). On the other hand, if a pinch-in operation is detected (NO in step S205), it is judged whether or not the touched positions coincide with an outline of an on-screen button (step S206). If the touched positions don't coincide with an outline of an on-screen buttons 31 (NO in step S206), a normal mode is maintained (step S214).

If the touched positions coincide with an outline of an on-screen buttons 31 (YES in step S204: Fig. 4(a)), it is transferred to an after-explained shifting mode of the on-screen button 31 (step S207). In the shifting mode, a position of the on-screen button 31 specified in the steps S204 to S206 is changed (shifted) to another position.

When transferred into the shifting mode, the on-screen button 31 is shifted in conjunction with a movement of the user's fingertips on the display 11 (step S208: Fig. 4(b)). Subsequently, it is judged whether or not the user's fingertips are taken away from the display 11 (step S209). Namely, it is judged whether or not the plural touched points are being detected. If the user's fingertips are not taken away from the display 11 (NO in step S209), a process flow is returned to the step S208 and thereby it is judged whether or not the user's finger tips are taken away while continuing the shifting of the on-screen button 31.

On the other hand, if the user's fingertips are not taken away from the display 11 (YES in step S209), the shifting mode for the on-screen button 31 is ended (step S210).

Subsequently to the step S210, it is judged whether or not another on-screen button 31 A exists at a shifting end position of the on-screen button 31 (step S211). If another on-screen button 31A exists at the shifting end position (YES in step S211), the on-screen button 31A is shifted to a shifting start position of the on-screen button 31 shifted in the steps S207 to S210 (step S212: Fig. 4(c)). Namely, displayed positions of the on-screens buttons 31 and 31 A are replaced each other.

After the step S212, the on-screens buttons 31 and 31A are displayed at their positions after replaced (step S213). Note that, if no other on-screen button 31A exists at the shifting end position in the step S211 (NO in step S211), the shifted on-screen button 31 is displayed at the shifting end position without any other changes (step S213).

After the step S213, the operation mode of the display 11 is transferred from the shifting mode to the normal operation mode (step S214). As explained above, the normal operation mode is not the shifting mode for shifting a position of an on-screen button 31 on the display 11, but a mode for executing an allocated function upon operating (touching/pressing) the on-screen button 11.

Note that the shifting end position may be fixed to end the shifting mode by a pinch-out (pinch-open) operation (an operation to open fingertips) after the on-screen button 31 has been specified and then shifted along with the above-explained operations. In this case, it is judged whether or not a pinch-out operation is done in the above step S209.

Here, the shifting mode of an on-screen button 31 is explained with reference to display screens (Figs. 4(a) to 4(c)) of the display 11. The display 11 in the present embodiment is a display of a navigation system installed in a vehicle for providing route guidance and so on. When the navigation system is active, on-screen buttons to which given functions such as "SERVICE OPERATOR", "VIEW STATUS", "ROUTE", "DESTINATION", "INFO. WINDOW", "SETTINGS" and "CURRENT LOCATION" are displayed on a display screen on the display 11, as shown in Figs 4.

In the normal operation mode, an allocated function is activated upon a user's fingertip touching an inside area of an on-screen buttons (upon pressing an on-screen button)

On the other hand, in the shifting mode, when a user is going to shift a position of an on-screen button 31 (explained by taking a "VIEW STATUS" button as an example), he/she touches an outline of the "VIEW STATUS" button 31 with his/her plural fingertips by a pinch-in operation, as shown in Fig. 4(a). The pinch-in operation is detected by the above-explained process in the step S205. Alternatively, the pinch-in operation is also detected when it is judged that the user's fingertips coincide with the outline of the "VIEW STATUS" button 31 by the above-explained process in the step S206. As a result, the control unit 12 transfers the normal operation mode to the shifting mode of the "VIEW STATUS" button 31 by the above-explained process in the step S207.

After the transition to the shifting mode, the fingertips are moved on the display 11 while pinching the "VIEW STATUS" button 31, as show in Fig. 4(b). The "VIEW STATUS" button 31 is shifted along with the movement of the fingertips by the process in the step S208. At this moment, shifted behavior of the "VIEW STATUS" button 31 is presented on the display 11. In addition, a displayed visual status of the "VIEW STATUS" button 31 after the transition to the shifting mode is changed from a displayed status when stopped still. Although the outline of the "VIEW STATUS" button 31 is displayed as a dashed line in the shifting mode in Fig. 4(b) (as a solid line in the normal operation mode), it may be possible to change its displayed color. By doing so, transition to the shift mode can be easily recognized, and shifting of an on-screen button 31 can be easily done.

And then, it is judged whether or not the user's fingertips are taken away from the display 11 by the above-explained process in the step S209, as show in Fig. 4(c). As a result, the "VIEW STATUS" button 31 is arranged at a position where the fingertips are taken away from the display 11, and the shifting mode ends.

In addition, if another on-screen button 31 A (explained by taking a "CURRENT LOCATION" button as an example) exists at a shifting end position of the "VIEW STATUS" button 31, the "CURRENT LOCATION" button is shifted as shown in Fig. 4(c). Namely, the "CURRENT LOCATION" button 31A is displayed at a shifting start position of the "VIEW STATUS" button 31 by the above-explained process in the step S212.

Meanwhile, it may be happen that the outline of the "VIEW STATUS" button 31 conflicts with another on-screen button (for example, a "DESTINATION" button or a "ROUTE" button in Fig. 4(c)) at the shifting end position of the "VIEW STATUS" button 31. Namely, it may a case where the "VIEW STATUS" button 31 overlaps over the "'DESTINATION" button or the "ROUTE" button, or a case where both of the buttons become closer than a predetermined distance. In these cases, the shifted on-screen button is displayed by the above-explained process in the step S213 after positions of the on-screen buttons are adjusted so as to actualize adequate distances. Note that a process for adjusting the positions so as to actualize adequate distances is included in the above-explained process in the step S213.

According to the above embodiment, a normal operation mode can be transferred to a shifting mode of an on-screen button when user's fingertips are contacted with at least two points on an outline of the on-screen button so as to pinch the on-screen button. In addition, a normal operation mode can be also transferred to a shifting mode of an on-screen button when user's fingertips become contacted with at least two points on an outline of the on-screen button through a pinch-in operation by the user. Therefore, an on-screen button can be shifted in a shorter time in comparison to a conventional long-press operation. A time length for shifting an on-screen button can be shortened than ever before.

In addition, since a transition to a shifting mode is avoided even when an on-screen button is touched for a long time (long-pressed), an erroneous operation can be prevented.

Further, a function to be executed by a long-press operation can be newly set. According to this, a transition operation to a shifting mode and a long-press operation can be realized concurrently while preventing an erroneous operation.

In addition, it is possible to transfer to a shifting mode through an intuitive operation of pinching an an-screen button, so that a button shifting function can be provided to a user in an easily understandable manner. Further, it is possible to end the shifting mode through an intuitive operation such as an operation of taking off fingertips from a display screen or a pinch-out operation, so that an ending function can be provided to a user in an easily understandable manner.

In addition, if another on-screen button is displayed at a shifting end position of one on-screen button, the other on-screen button can be displayed at a shifting start position of the shifted one on-screen button. Therefore, a position of the other on-screen button can be also changed easily by shifting the one on-screen button.

Note that the display 11 may be configured as a display device for displaying three-dimensionally other than a display device for displaying two-dimensionally. According to this, the featured art adopted in the above embodiment can be provided in a display that can display three-dimensionally.

In addition, the display device in the display (touchscreen) 11 is not limited to an LCD panel, but may be an organic EL panel. Further, the touch panel 11B is not limited to an electrostatic capacitance type, but may be another type such as a resistive type with multi-touch detection ability.

The entire contents of a Japanese Patent Application No. 2010-136288 (filed June 15, 2010) are incorporated herein by reference. Although the invention has been described above by reference to a certain embodiment of the invention, the invention is not limited to the embodiment described above. Scope of the present invention is determined in the context of the claims.

## Claims

1. An information display device comprising:
a display that includes a touch panel and displays an on-screen button to which a given function is allocated on a display screen; and
a controller that (a) detects two or more points that an operator touches on the touch panel, (b1) judges whether or not the touched points coincide with an outline of the on-screen button, and (c1) transfers a normal operation mode to a shifting mode for shifting a position of the on-screen button when the touched points coincide with the outline of the on-screen button.

2. An information display device comprising:
a display that includes a touch panel and displays an on-screen button to which a given function is allocated on a display screen; and
a controller that (a) detects two or more points that an operator touches on the touch panel, (b2) judges whether or not an pinch-in operation to narrow a distance of the touched points is done, and (c2) transfers a normal operation mode to a shifting mode for shifting a position of the on-screen button when the pinch-in operation is done.

3. The information display device according to claim 1 or 2, wherein
the controller, in the shifting mode, (d) shifts a position of the on-screen button on the display screen in conjunction of a movement of the touched points, and (e1) arranges the on-screen button at a position where the touched points become undetectable and then ends the shifting mode.

4. The information display device according to claim 1 or 2, wherein
the controller, in the shifting mode, (d) shifts a position of the on-screen button on the display screen in conjunction of a movement of the touched points, and (e2) arranges the on-screen button at a position where a pinch-out operation to widen a distance of the touched points is detected and then ends the shifting mode.

5. The information display device according to any one of claims 1 to 4, wherein
a displayed visual status of the on-screen button in the shifting mode is changed from a displayed visual status in the normal operation mode.

6. The information display device according to any one of claims 1 to 5, wherein
the controller, when another on-screen button is displayed at a shifting end position of the on-screen button, arranges the other on-screen button at a shifting start position of the on-screen button that is shifted.

7. The information display device according to any one of claims 1 to 6, wherein
the display displays three-dimensionally.

8. An information display device comprising:
a display means that includes a touch panel and displays an on-screen button to which a given function is allocated on a display screen; and
a position shifting means that (a) detects two or more points that an operator touches on the touch panel, (b1) judges whether or not the touched points coincide with an outline of the on-screen button, and (c1) transfers a normal operation mode to a shifting mode for shifting a position of the on-screen button when the touched points coincide with the outline of the on-screen button.

9. An information display device comprising:
a display means that includes a touch panel and displays an on-screen button to which a given function is allocated on a display screen; and
a position shifting means that (a) detects two or more points that an operator touches on the touch panel, (b2) judges whether or not an pinch-in operation to narrow a distance of the touched points is done, and (c2) transfers a normal operation mode to a shifting mode for shifting a position of the on-screen button when the pinch-in operation is done.

10. A method for a shifting operation of an on-screen button to shift an on-screen button to which a given function is allocated on a touchscreen of which a display screen the on-screen button is displayed on, the method comprising:
(A) detecting two or more points that an operator touches on the touch panel,
(B1) judging whether or not the touched points coincide with an outline of the on-screen button, and
(C1) transferring a normal operation mode to a shifting mode for shifting a position of the on-screen button when the touched points coincide with the outline of the on-screen button.

11. A method for a shifting operation of an on-screen button to shift an on-screen button to which a given function is allocated on a touchscreen of which a display screen the on-screen button is displayed on, the method comprising:
(A) detecting two or more points that an operator touches on the touch panel,
(B2) judging whether or not an pinch-in operation to narrow a distance of the touched points is done, and
(C2) transferring a normal operation mode to a shifting mode for shifting a position of the on-screen button when the pinch-in operation is done.

12. The method for a shifting operation of an on-screen button according to claim 10 or 11, wherein,
in the shifting mode, (D) shifting a position of the on-screen button on the display screen in conjunction of a movement of the touched points, and (E1) arranging the on-screen button at a position where the touched points become undetectable and then ending the shifting mode.

13. The method for a shifting operation of an on-screen button according to claim 10 or 11, wherein,
in the shifting mode, (D) shifting a position of the on-screen button on the display screen in conjunction of a movement of the touched points, and (E2) arranging the on-screen button at a position where a pinch-out operation to widen a distance of the touched points is detected and then ending the shifting mode.

14. The method for a shifting operation of an on-screen button according to any one of claims 10 to 13, wherein
a displayed visual status of the on-screen button in the shifting mode is changed from a displayed visual status in the normal operation mode.

15. The method for a shifting operation of an on-screen button according to any one of claims 10 to 14, further comprising,
when another on-screen button is displayed at a shifting end position of the on-screen button, arranging the other on-screen button at a shifting start position of the on-screen button that is shifted.

## Amended claims

### Amended claims under Art. 19.1 PCT

**1.** (Amended) An information display device comprising:
a display that includes a touch panel and displays an on-screen button to which a given function is allocated on a display screen; and
a controller that (a) detects two or more points that an operator touches on the touch panel, (b1) judges whether or not the touched points coincide with an outline of the on-screen button, (c1) transfers a normal operation mode to a shifting mode for shifting a position of the on-screen button when the touched points coincide with the outline of the on-screen button, (d) shifts a position of the on-screen button on the display screen in conjunction of a movement of the touched points, and (e) arranges the on-screen button at a position where a pinch-out operation to widen a distance of the touched points is detected and then ends the shifting mode.

**2.** (Amended) The information display device according to claim 1, wherein
the controller, after the (b1), (b2) judges whether or not an pinch-in operation to narrow a distance of the touched points is done when the touched points doesn't coincide with the outline of the on-screen button, and (c2) transfers the normal operation mode to the shifting mode when the pinch-in operation is done and then the touched points coincide with the outline of the on-screen button by the pinch-in operation.

**3.** (Cancelled)

**4.** (Cancelled)

**5.** (Amended) The information display device according to claim 1 or 2, wherein
a displayed visual status of the on-screen button in the shifting mode is changed from a displayed visual status in the normal operation mode.

**6.** (Amended) The information display device according to claim 1, 2 or 5, wherein
the controller, when another on-screen button is displayed at a shifting end position of the on-screen button, arranges the other on-screen button at a shifting start position of the on-screen button that is shifted.

**7.** (Amended) The information display device according to claim 1, 2, 5 or 6, wherein
the display displays three-dimensionally.

**8.** (Amended) An information display device comprising:
a display means that includes a touch panel and displays an on-screen button to which a given function is allocated on a display screen; and
a position shifting means that (a) detects two or more points that an operator touches on the touch panel, (b1) judges whether or not the touched points coincide with an outline of the on-screen button, (c1) transfers a normal operation mode to a shifting mode for shifting a position of the on-screen button when the touched points coincide with the outline of the on-screen button, (d) shifts a position of the on-screen button on the display screen in conjunction of a movement of the touched points, and (e) arranges the on-screen button at a position where a pinch-out operation to widen a distance of the touched points is detected and then ends the shifting mode.

**9.** (Amended) The information display device according to claim 8, wherein
the position shifting means, after the (b1), (b2) judges whether or not an pinch-in operation to narrow a distance of the touched points is done when the touched points doesn't coincide with the outline of the on-screen button, and (c2) transfers the normal operation mode to the shifting mode when the pinch-in operation is done and then the touched points coincide with the outline of the on-screen button by the pinch-in operation.

**10.** (Amended) A method for a shifting operation of an on-screen button to shift an on-screen button to which a given function is allocated on a touchscreen of which a display screen the on-screen button is displayed on, the method comprising:
(A) detecting two or more points that an operator touches on the touch panel,
(B1) judging whether or not the touched points coincide with an outline of the on-screen button,
(C1) transferring a normal operation mode to a shifting mode for shifting a position of the on-screen button when the touched points coincide with the outline of the on-screen button,
(D) shifting a position of the on-screen button on the display screen in conjunction of a movement of the touched points, and
(E) arranging the on-screen button at a position where a pinch-out operation to widen a distance of the touched points is detected and then ending the shifting mode.

**11.** (Amended) A method for a shifting operation of an on-screen button, comprising,
after the (B1), (B2) judging whether or not an pinch-in operation to narrow a distance of the touched points is done when the touched points doesn't coincide with the outline of the on-screen button, and
(C2) transferring the normal operation mode to the shifting mode when the pinch-in operation is done and then the touched points coincide with the outline of the on-screen button by the pinch-in operation.

**12.** (Cancelled)

**13.** (Cancelled)

**14.** (Amended) The method for a shifting operation of an on-screen button according to claim 10 or 11, wherein
a displayed visual status of the on-screen button in the shifting mode is changed from a displayed visual status in the normal operation mode.

**15.** (Amended) The method for a shifting operation of an on-screen button according to claim 10, 11 or 14, further comprising,
when another on-screen button is displayed at a shifting end position of the on-screen button, arranging the other on-screen button at a shifting start position of the on-screen button that is shifted.
